# EUROPÄISCHE PATENTANMELDUNG

(11) **EP 3 547 180 A1**
(43) Veröffentlichungstag der Anmeldung: **02.10.2019**
(21) Anmeldenummer: 18165283.5
(22) Anmeldetag: 29.03.2018
(51) Int. Cl.: G06F 21/00, G06F 11/00, G09G 3/00

(54) **OPTIMIERUNG DER SICHERHEITSPRÜFUNG ZUR DARSTELLUNG SICHERHEITSRELEVANTER BILDDATEN**

(71) Anmelder: Deuta-Werke GmbH, 51465 Bergisch Gladbach (DE)
(72) Erfinder: FERGER, Max, 51427 Bergisch Gladbach (DE); LI, Chunyan, 51469 Bergisch Gladbach (DE); Dr. GANZ, Rudolf, 51491 Overath (DE)
(74) Vertreter: Lippert Stachow Patentanwälte Rechtsanwälte

(57) **Zusammenfassung**

Die Erfindung betrifft ein Verfahren und eine Vorrichtung zur Darstellung einer sicherheitsrelevanten Information mittels einer Prüfeinheit (200; 300).

Es wird ein übergreifender Bereich (40) vordefiniert, welcher eine Anzahl Überwachungsbereiche (41a, 41b, 41c...; 42a, 42b, 41b...; 43) einschließt. Zum übergreifenden Bereich (40) prüft die Prüfeinheit mit einer ersten Häufigkeit (f1) wiederholend auf Kontinuität bzw. Veränderung der Bilddaten. Zu jeweils einer Teilmenge aus der Anzahl von Überwachungsbereichen (41a, 41b, 41c...; 42a, 42b, 41b...; 43) führt die Prüfeinheit (200; 300) nacheinander eine Sicherheitsprüfung durch. Jeder dieser Überwachungsbereiche wird dabei mit einer zweiten Häufigkeit (f2) geprüft, die geringer ist als die erste Häufigkeit (f1).

Ferner wird eine Prüfeinheit (300) vorgeschlagen, die zu alphanumerischen Zeichenfeldern (41a, 41b, 41c...) feldweise einen Prüfcode generiert und daraus anhand einer Vergleichstabelle (318) durch Verkettung (340) eine anzuzeigende Zeichenfolge zurückgewinnt.

## Beschreibung

Die Erfindung betrifft allgemein den Bereich der Sicherheitstechnik (engl. safety technology). Die Erfindung betrifft insbesondere ein Verfahren und eine Vorrichtung zur zuverlässigen Darstellung einer sicherheitsrelevanten Information bzw. eines sicherheitsrelevanten Zustands mit einer Anzeige für Pixelgrafik, insbesondere mit einem TFT-Bildschirm. Auch in §sicherheitskritischen Anwendungen werden inzwischen vermehrt derartige Anzeigen in handelsüblicher Technik eingesetzt.

Bei gattungsgemäßen Verfahren und Vorrichtungen erstellt ein Rechner unter Berücksichtigung einer Eingangsgröße bzw. eines Eingangsparameter, wie z.B. eine Zustandsinformation, einen Strom aus Bilddaten, der Daten zur pixelformatierten Darstellung eines Bildes enthält (nachfolgend pixelformatierte Bilddaten). Die pixelformatierten Bilddaten dienen zum Ansteuern einzelner Bildpunkte der Anzeige, d. h. zum Darstellen eines Bildes in Pixelgrafik, und werden vom bilderzeugenden Rechner an die Anzeige weitergeleitet. Aufgrund der Komplexität der typisch zur Grafikerzeugung verwendeten Rechner sind diese im signaltechnischen Sinne als unsicher einzustufen.

Deshalb wird bei gattungsgemäßen Verfahren der Bilddatenstrom einer besonderen Prüfeinheit zugeführt zwecks Durchführung einer rechentechnischen Sicherheitsprüfung. Diese Sicherheitsprüfung betrifft mindestens einen Überwachungsbereich, welcher zumindest mehrere, in der Regel eine Vielzahl Bildpunkte bzw. Bildpixel, des jeweils aktuell darzustellenden Bildes umfasst. Als "Überwachungsbereich" werden vorliegend insbesondere Anzeigebereiche benannt, innerhalb deren wesentliche Anzeigeinhalte der zu übermittelnden Information präsentiert werden und deren Pixel ein einem oder mehreren jeweils zusammenhängenden Pixelbereichen beliebiger Kontur-Formen liegen.

Ein gattungsgemäßes Verfahren und eine entsprechende Vorrichtung sind beispielsweise aus der Patentanmeldung WO 2012/003872 A1 bzw. den Patenten EP 2 353 089 B1 und EP 2 273 369 B1 der Anmelderin vorbekannt. Ein entsprechendes System hat sich im Markt bereits bewährt und wird unter der Handelsbezeichnung "IconTrust®" vertrieben (DEUTA-WERKE GmbH; D-51465 Bergisch Gladbach).

Bei diesem Ansatz erfolgt die rechentechnische Sicherheitsprüfung durch deterministische Berechnung eines Prüfcodes unter Berücksichtigung der Darstellungswerte aller Pixel innerhalb eines bestimmten Überwachungsbereichs, d.h. durch Abbildung der Bilddaten zum betreffenden Überwachungsbereich auf einen im Datenumfang erheblich reduzierten Prüfcode. Ausgehend von diesem Prüfcode kann dann z.B. ein Rückschluss auf eine mögliche Eingangsgröße und deren Vergleich mit der tatsächlichen Eingangsgröße erfolgen, welche beispielsweise eine Zustandsinformation darstellen kann. Alternativ kann die Prüfeinheit aus der Eingangsgröße einen Referenzcode bestimmen, der zum sicherheitsgerichteten Vergleich mit dem jeweiligen Prüfcode herangezogen wird. Bei fehlender Übereinstimmung bzw. Gültigkeit wird eine sicherheitsgerichtete Reaktion ausgelöst, die insbesondere eine Fehleroffenbarung an den Nutzer einschließt. Ein vergleichbares Verfahren ist aus dem Patent EP 2 254 039 B1 bekannt.

Ein Vorteil dieser Ansätze liegt darin, dass mit einem handelsüblichen Standardrechner, welcher die Erfordernisse für eine sicherheitstechnische Zertifizierung meist nicht erfüllt, dennoch eine sichere Darstellung gewährleistet werden. Ein weiterer Vorteil besteht in der freien Konfigurierbarkeit, d.h. die System können in einem Konfigurationsmodus an beliebige vom Nutzer vorgegebene Darstellungsformate bzw. Bildgrafiken angepasst werden, ohne das die ggf. sicherheitszertifizierte Architektur der Prüfeinheit angepasst werden muss.

WO 2012/003872 A1 lehrt ferner die Möglichkeit, parallel mehrere Überwachungsbereiche mit derselben Prüfeinheit zu prüfen. Ferner wird beschrieben, dass das Prinzip sich für jegliche quantifizierbaren Eingangsparameter bzw. Eingangsgrößen eignet, einschließlich Textinformationen, z.B. aus alphanumerischen Zeichen. In vielen Anwendungen sollen dem Benutzer am Display z.B. auch zumindest meist mehrere sicherheitsrelevante Informationen in Form von Text oder Zahlen angezeigt werden.

Ungeachtet der Art angezeigter sicherheitsrelevanter Information muss ein gattungsgemäßes System grundsätzlich für jeden Überwachungsbereich technische Ressourcen in der Prüfeinheit bereitstellen. Diese umfassen z.B. für jeden Bereich je eine gemäß Definition des Überwachungsbereichs konfigurierte Pixel-Selektiervorrichtung, die aus dem Strom der Bilddaten relevante Pixeldaten auswählt, und jeweils ein zugeordneter Codierer, welchem die ausgewählten Pixel zugeführt werden. Somit ist für jeden Überwachungsbereich ein Codierer zur Erstellung der Prüfcodes vorzuhalten. Darüber hinaus muss um Fehler feststellen zu können ein Vergleich jedes einzelnen Prüfcodes mit einem Referenzwert erfolgen. Dieser Vergleich kann ggf. außerhalb der Prüfeinheit erfolgen, wie in EP 2 353 089 B1 erläutert, aber erfolgt bevorzugt in der Prüfeinheit, d.h. diese muss auch hierfür Ressourcen bereitstellen.

Mit steigender Zahl an Überwachungsbereichen stößt ein derartiges Design an technische Grenzen. Die Praxis hat gezeigt, dass dies u. a. bei der gleichzeitigen sicherheitstechnischen Überwachung der Anzeige von einer Mehrzahl alphanumerischen Daten, wie bspw. Konfigurationsdaten auftritt. Beispielhaft betrifft dies etwa die Eingabe der Zugkonfiguration im Führerstand eines Triebfahrzeugs, oder aber die Anzeige eine Vielzahl Betriebsparametern im Kontrollraum bzw. am Steuerpult einer Industrie-Großanlage. Mit dem bekannten Ansatz sind in diesen und vergleichbaren Fällen eine Vielzahl von Überwachungsbereiche, ggf. mehrere hundert Überwachungsbereiche, einer Sicherheitsprüfung zu unterziehen.

Folglich besteht Bedarf für eine Weiterentwicklung der gattungsgemäßen Ansätze. Eine erste Aufgabe liegt mithin in einer Weiterentwicklung dahingehend, dass eine Prüfeinheit mit bestehender, ggf. sicherheitszertifizierter Architektur eine größere Zahl von Überwachungsbereichen sicherheitstechnisch überwachen kann bzw. dahingehend, dass die Nutzung bereits vorhandener Ressourcen der Prüfeinheit optimiert wird.

Diese Aufgabe wird gemäß einem ersten Aspekt gelöst durch ein Verfahren nach Anspruch 1 und eine Vorrichtung nach Anspruch 2.

Unabhängig davon bietet nach einem zweiten Aspekt ein Verfahren nach Anspruch 13 und eine Vorrichtung nach Anspruch 15 einen weiteren Lösungsansatz speziell für sicherheitskritische Text- und/oder Zahleninformation.

Ferner wird die Aufgabe auch durch eine Prüfeinheit nach dem unabhängigen Anspruch 16 gelöst.

Ein gattungsgemäßes System umfasst eine Anzeigevorrichtung. Die Anzeige kann z.B. ein Display in TFT-Technik oder vergleichbarer Technik sein, die zum Darstellen eines Bildes in Pixelgrafik ausgehend von rechnergenerierten vorzugsweise digitalen Bilddaten geeignet ist. Die Bilddaten sind dabei allgemein veränderlich bzw. zeitvariabel, d.h. die Darstellung erfolgt ggf. mit einer gewissen Dynamik. Weiterhin ist gattungsgemäß eine Prüfeinheit vorgesehen, welcher die Bilddaten zugeführt werden und die konfiguriert ist, eine rechentechnische Sicherheitsprüfung anhand der pixelformatierten Bilddaten durchzuführen. Der darstellende Rechner ist kein notwendiger Bestandteil der erfindungsgemäßen Vorrichtung. Die Anzeigevorrichtung wird für die bestimmungsgemäße Verwendung jedoch an einen Rechner angeschlossen. Es handelt sich in der Regel als unsicher einzustufenden Rechner (sog. darstellender Rechner), z.B. eine handelsübliche PC-Plattform, zum Erzeugen von pixelformatierten Bilddaten in geeignetem Signalformat (z.B. LVDS oder dgl.).

Die Sicherheitsprüfung erfolgt vorliegend zu einer bestimmten Anzahl von Überwachungsbereichen, wobei die Überwachungsbereiche jeweils eine Vielzahl Bildpixel eines darzustellenden Bildes umfassen. Die Bildpixel der Überwachungsbereich können dabei eine zusammenhängende Menge darstellen oder getrennte Bereich erfassen. Auf die Kontur eines Überwachungsbereich im darzustellenden Bild kommt es grundsätzlich nicht an. Bei der genannten Anzahl kann es sich um eine Teilauswahl aus allen Überwachungsbereiche in der aktuellen Darstellung handeln, insbesondere wenn mindestens ein weiterer Überwachungsbereich vorhanden ist, der nicht erfindungsgemäß, sondern z.B. mit dem vorbekannten Ansatz überwacht wird. Die Überwachungsbereiche sind konfigurierbar vorbestimmt und betreffen typisch solche Bilddaten die eine Eingangsgröße bzw. einen Eingangsparameter mit Sicherheitsrelevanz abbilden, und können auf charakteristische Teilbereiche der jeweiligen Darstellung beschränkt sein.

Zur Sicherheitsprüfung wird in bekannter Art und Weise zu jedem Überwachungsbereich rechentechnisch ein Prüfcode generiert, insbesondere rechentechnisch generiert, z.B. eine CRC-Prüfsumme oder dgl., sowie mindestens eine Vergleichsoperation mit einem Referenzwert unter Verwendung des generierten Prüfcodes durchführt. Auf die Art der Vergleichsoperation kommt es nicht an. Es kann aus dem erstellten Prüfcode ein Referenzwert ermittelt werden, z.B. anhand einer Lookup-Tabelle, der anschließend mit der maßgeblichen Eingangsgröße verglichen werden. Alternativ kann aus der Eingangsgröße ein Referenzcode bestimmt werden, z.B. anhand einer Lookup-Tabelle, der mit dem erstellten Prüfcode verglichen wird. Eine entsprechende Vergleichsoperation erfolgt nicht zwingend, aber bevorzugt innerhalb der Prüfeinheit. Alternativ können die Prüfcode zwecks Vergleich z.B. an einen sicheren Quellrechner übertragen werden.

Ein Kerngedanke gemäß dem ersten Aspekt der Erfindung beruht auf der Erkenntnis, dass eine bestimmte Auswahl bzw. Anzahl der Überwachungsbereiche in der jeweils aktuellen Darstellung in vielen Anwendungsfällen mit einer deutlich geringeren Anzahl an simultanen Codier- und Vergleichsvorgängen auskommen kann. Eine Annahme dabei ist, dass die zu überwachenden Anzeigeinformationen über den jeweiligen Betrachtungsvorgang eines Benutzers, während eines Betrachtungszeitraums, sich selten oder nicht verändern bzw. keine ausgeprägte Dynamik aufweisen.

Als Betrachtungszeitraum ist hierbei die Zeit bezeichnet, die ein Betrachter typisch benötigt bzw. nutzt, um die simultan angezeigten Informationen auf einem Display TFT zu betrachten, zu erfassen und ggf. zu bewerten. Der Betrachtungszeitraum endet insbesondere mit dem Zeitpunkt, zu dem für den Betrachter offensichtlich wird, dass die Informationen nicht mehr als gesichert angezeigt werden, wie z.B. nach Wechsel der Bildschirmseite, etwa in einen anderen Kontext, oder/und nach erkennbarem Abschluss des Konfigurationsvorgangs, etwa durch Farbwechsel angezeigt, usw.

Die vorstehende Annahme zur Bilddynamik gilt typisch aber nicht ausschließlich bei der Darstellung von Information in Form alphanumerischen Zeichenfolgen (Text, Zahlen, usw.). Der verwendete alphanumerische Zeichensatz kann ein Zeichensatz mit ausgewählten Zeichen, die z.B. nach ASCII, UNICODE bzw. ISO 10646 oder dgl. kodiert sind, in beliebiger Schrift/Sprache sein. Die Zeichencodierung wird in der Regel nur im darstellenden Rechner zur Erzeugung der Bilddaten eingesetzt. Auf die Sprache des Alphabets bzw. er Zahlen der Zeichenfolgen kommt es also nicht an, weil das System bzw. die Prüfeinheit inhärent für jede beliebige pixelformatiert Darstellung geeignet ist.

### ERSTER ASPEKT

Der Kerngedanke des ersten Aspekts kann wie folgt zusammengefasst werden: bei einer Anzahl ausgewählter Überwachungsbereiche wird nicht jeder Überwachungsbereich parallel, bzw. mit jedem möglichen Systemtakt bzw. Prüfungsschritt der Prüfeinheit, einer Sicherheitsprüfung unterzogen sondern jeder einzelne Überwachungsbereich dieser Auswahl wird weniger häufig der Sicherheitsprüfung unterzogen, d.h. es wird jeweils nur ein Teil der Überwachungsbereiche dieser Auswahl sicherheitsgeprüft. Zugleich wird die Anzahl ausgewählter Überwachungsbereiche in einem übergreifender Bereich ("supra-region") zusammengefasst, und dieser übergreifende Bereich wird gesamthaft eine Prüfung dahingehend unterzogen, dass keine Veränderung auftritt, insbesondere hinsichtlich einer Veränderung der pixelformatierten Bilddaten des übergreifenden Bereichs. Hierdurch kann mit weniger Ressourcen, insbesondere mit einer geringeren Anzahl von Codierern, dennoch eine sicherheitstechnisch zuverlässige Überwachung erzielt.

Dazu wird erfindungsgemäß, verfahrensseitig gemäß dem Kennzeichen aus Anspruch 1 und vorrichtungsseitig gemäß dem Kennzeichen aus Anspruch 2, vorgeschlagen, dass:
- in der Prüfeinheit ein übergreifender Bereich vordefiniert ist, welcher jeden Überwachungsbereich aus der Anzahl Überwachungsbereiche einschließt, insbesondere vollständig einschließt;
- die Prüfeinheit zum übergreifenden Bereich, insbesondere während eines bestimmbaren Zeitraums, mit einer ersten Häufigkeit wiederholend eine Veränderungsüberprüfung durchführt, insbesondere hinsichtlich einer Veränderung pixelformatierter Bilddaten zum übergreifenden Bereich; und dass
- die Prüfeinheit, insbesondere während des Zeitraums der Veränderungsüberprüfung, die Sicherheitsprüfung nacheinander zu jeweils einer Teilmenge aus der Anzahl von Überwachungsbereichen durchführt, sodass - bezogen auf jeweils einen bestimmten Überwachungsbereich aus der Anzahl im übergreifenden Bereich - die Sicherheitsprüfung dieses Überwachungsbereichs mit einer zweiten Häufigkeit erfolgt, die geringer ist als die erste Häufigkeit, insbesondere erheblich geringer.

Die Sicherheitsprüfung erfolgt im übergreifenden Bereich damit nicht für alle enthaltenen Überwachungsbereiche zeitgleich bzw. rechentechnisch parallel, sondern zeitlich und räumlich auf einzelne Überwachungsbereiche verteilt. Die Sicherheitsprüfung kann dabei insbesondere schrittweise z.B. zeitlich nacheinander und für alle ausgewählten Überwachungsbereiche, einzeln, paar- oder gruppenweise, erfolgen. Die geprüfte Teilmenge stellt dabei bevorzugt nur einen Bruchteil bzw. geringen Anteil aus der Anzahl der ausgewählter Überwachungsbereiche dar.

Es können erfindungsgemäß auch mehrere übergreifende Bereiche für jeweils eine entsprechende Anzahl Überwachungsbereiche vorgesehen sein, d.h. es wird mindestens ein übergreifender Bereich mit zugeordneter Anzahl Überwachungsbereiche vorgesehen und der erfindungsgemäßen Prüfung bzw. Überwachung unterzogen.

Die Wiederholungsrate bzw. erste Häufigkeit der Veränderungsüberprüfung kann dabei dem Systemtakt bzw. der üblichen Überprüfungsrate der Prüfeinheit entsprechen, dies gilt ebenfalls für Häufigkeit der Sicherheitsprüfung über alle Überwachungsbereiche der ausgewählten Anzahl betrachtet.

Es wird also in jedem Schritt nur ein Anteil, insbesondere ein geringer Anteil, der Anzahl von Überwachungsbereichen im übergreifenden Bereich einer Sicherheitsprüfung unterzogen. Die jeweils geprüften Teilmenge kann bspw. nur einen einzigen Überwachungsbereich enthalten. Bei einer Anzahl von N Überwachungsbereichen ist die überwachungsbereichsbezogene zweite Häufigkeit dann das 1/N-fache der ersten Häufigkeit. In einer Minimalvariante sind so insbesondere in der Prüfeinheit nur zwei Codierer erforderlich um eine ggf. hohe Anzahl N Überwachungsbereiche zu prüfen bzw. überwachen.

Es können auch Gruppen mit mehreren Überwachungsbereichen parallel geprüft werden, falls z.B. eine sehr hohe Anzahl N Überwachungsbereiche vorliegt bzw. ein relativ kurzer Betrachtungszeitraum (s. oben) vorgegeben ist. Ferner ist die vorgeschlagene Lösung skalierbar, d.h. es können mehrere übergeordnete Bereiche für jeweils eine Auswahl von N Überwachungsbereichen vorgesehen werden. Bevorzugt ist hingegen eine möglichst geringe Menge von übergeordneten Bereiche, denen vorzugsweise ein eigener Codierer zugeordnet wird. Daneben kann unabhängig mit derselben Prüfeinheit für andere Überwachungsbereiche, insbesondere solcher mit hochdynamischer Anzeige, wie Tachometer und dgl., parallel das an sich bekannte Verfahren mit hoher Häufigkeit bzw. Frequenz, insbesondere mit der o.g. ersten Häufigkeit, eingesetzt werden.

Die vorgeschlagenen Lösungen können insbesondere ohne Hardware-Veränderung mit bestehenden Systemen bzw. Architekturen eingesetzt werden, die hinsichtlich der Überwachungsbereiche konfigurierbar sind.

Die Veränderungsüberprüfung kann rechentechnisch parallel bzw. synchron zu der jeweils "springenden" bzw. bereichsvariablen Sicherheitsprüfung im übergeordneten Bereich erfolgen. Denkbar ist allerdings auch eine weitergehende Ressourceneinsparung dahingehend, dass die Veränderungsüberprüfung alternierend zu jeder Sicherheitsprüfung erfolgt, sodass ggf. anstatt mindestens zwei Codierer, nur ein einziger Codierer für eine ausgewählte Vielzahl N Überwachungsbereiche benötigt wird.

Bei der vorgeschlagenen Lösung nach dem ersten Aspekt wird also zu jeder zu überwachenden Information, für welche die vorstehende Annahme greift, wie bisher ein Überwachungsbereich zugeordnet. Dieser wird jedoch nicht mit der technisch möglichen Taktrate, z.B. der Bildrate, kodiert und geprüft, sondern nur mindestens einmal während eines vorgegebenen Zeitraums, insbesondere während des Betrachtungszeitraums. Die ausgewählte Anzahl dieser Überwachungsbereich kann soz. als "sporadischer Überwachungsbereich" bezeichnet werden. Diese "sporadischen Überwachungsbereiche" werden innerhalb eines oder mehrerer weniger übergeordneter bzw. übergreifender Beiche (Pseudo-Überwachungsbereich) zusammengefasst. Ein solcher übergeordneter "Pseudoüberwachungsbereich" kann wie ein gewöhnlicher Überwachungsbereich aus einem oder mehreren Bereichen zusammenhängender Pixelbereiche unterschiedlicher Formen zusammengesetzt sein. Er enthält die Anzahl ausgewählter Überwachungsbereiche vorzugsweise vollständig und kann ggf. zur erleichterten Selektierung der Pixeldaten darüber hinaus weitere Bilddaten mit umfassen, d.h. der "Pseudoüberwachungsbereich" kann andere nicht durch eine Sicherheitsprüfung überwachte Bereiche überdecken, die jedoch statische oder selten ändernde Anzeigeinhalte beinhalten sollten. Beispielsweise kann ein "Pseudoüberwachungsbereich" bzw. übergreifender Bereich in einfachster Ausführung ein größeres einzelnes rechteckiges Anzeigefeld darstellen, in dem mehrere "sporadische Überwachungsbereiche" ggf. beliebig verteilt enthalten sind. Wie die einzelnen Überwachungsbereiche muss der übergreifende Pseudo-Bereich nicht zwingend pixelmäßig zusammenhängen, sondern kann mehrere getrennte Bildbereiche (die jeweils aus zusammenhängenden Pixel bestehen) darstellen, z.B. die Vereinigungsmenge aus der Anzahl Überwachungsbereiche, d.h. aus ggf. disjunkten Pixelmengen.

In sicherheitstechnisch bevorzugter Ausführungsform wird vorgesehen, dass die Prüfeinheit während des Zeitraums der Veränderungsüberprüfung zu jedem Überwachungsbereich mindestens eine Sicherheitsprüfung durchführt. Dieser Zeitraum entspricht vorzugsweise einem nutzerbezogenen Betrachtungszeitraum. Der Zeitraums der Veränderungsüberprüfung kann insbesondere einem vorbestimmten oder von der Prüfeinheit selbsttätig bestimmten Betrachtungszeitraum (s. oben), insbesondere passend zur darzustellenden Grafik, entsprechen.

Die Prüfeinheit kann insbesondere pro Veränderungsüberprüfung, insbesondere rechentechnisch parallel zu jeder Veränderungsüberprüfung, jeweils eine Sicherheitsprüfung zu mindestens einem ausgewählten Überwachungsbereich aus der Anzahl Überwachungsbereiche durchführen. Dabei kann für jede Veränderungsüberprüfung z.B. die Sicherheitsprüfung zu nur genau einem Überwachungsbereich aus dem Pseudo-Überwachungsbereich erfolgen. Weitere parallele Sicherheitsprüfungen anderer Überwaschungsbereiche, die nicht zum übergeordneten Bereich gehören sind dabei möglich (s. oben).

Die Veränderungsüberprüfung unterscheidet sich von eigentlichen Sicherheitsprüfung dahingehend, dass erstere keinen Vergleich mit einer Eingangsgröße beinhaltet. Es kann ansonsten vorteilhaft für beide Prüfungen entsprechende bzw. prinzipgleiche Technik, insbesondere zum Erzeugen eines Prüfcodes, eingesetzt werden.

In einer bevorzugten Umsetzung der Veränderungs-Überprüfung generiert die Prüfeinheit jeweils zu Beginn eines Zeitraums (der Veränderungsüberprüfung), bei einer Initialisierung, zum übergreifenden Bereich anhand der Bilddaten einen Referenz-Überprüfungscode, und erzeugt jeweils bei vorzugweise jeder anschließenden Veränderungsüberprüfungen anhand der Bilddaten jeweils einen neuen bzw. aktuellen Überprüfungscode. Die Codierung kann dabei identisch zu derjenigen sein, die in der Sicherheitsprüfung eingesetzt wird. Der jeweils aktuelle Überprüfungscode wird dann mit dem Referenz-Überprüfungscode verglichen, um auf eine Veränderung der pixelformatierten Bilddaten zum übergreifenden Bereich schließen zu können. Vorzugsweise wird jede erkannte Veränderung dem Benutzer als Fehlerfall angezeigt, insoweit dies nicht dem Soll-Verhalten entspricht. Insoweit ist die Veränderungsüberprüfung keine Überprüfung im eigentlichen sicherheitstechnischen Sinn eines IST-SOLL Vergleichs mit einer tatsächlichen Eingangsgröße (daher "Pseudo-Bereich").

Im Gegensatz dazu kann bei der Sicherheitsprüfung die Prüfeinheit zu jedem Überwachungsbereich der jeweiligen Teilmenge einen zugehörigen Prüfcode generieren und diesen mit einem Referenzwert vergleichen. Hierbei sind unterschiedliche Vergleichsmodi bekannt (s. oben).

In einer möglichen Weitebildung wird der Referenz-Überprüfungscode bei der Initialisierung erst validiert bzw. aktualisiert, nachdem eine initiale positive Sicherheitsprüfung zu allen Überwachungsbereichen aus der Anzahl im übergeordneten Pseudo-Bereich erfolgt ist.

In einer Ausführungsform ist vorgesehen, dass die Prüfeinheit mindestens eine oder mehrere Recheneinheiten, insbesondere eine digitale, programmierbare integrierte Logikschaltung, wie ein FPGA, DSP oder dgl. umfasst. Dabei kann die Sicherheitsprüfung zu jedem Überwachungsbereich anhand mindestens eines ersten in der Recheneinheit implementierten Codierers, vorzugsweise mittels eines ersten Codierverfahrens, durchführen. Andererseits kann die Veränderungsüberprüfung zum übergreifenden Bereich anhand eines getrennt in der Recheneinheit implementierten zweiten Codierers durchgeführt werden, vorzugsweise mittels eines zweiten Codierverfahrens. Das erste und zweite Codierverfahren können unterschiedlich implementiert sein, bei dem ersten Codierverfahren liegt der Schwerpunkt auf hoher Sicherheit, insbesondere einem großen Hamming-Abstand, wie z.B. bei einer CRC32-Prüfsumme. Beim zweiten Codierverfahren kann ggf. ein weniger rechenintensives bzw. rechentechnisch schnelleres Codierverfahren, wie z.B. eine CRC16-Prüfsumme oder ein anderes Prüfsummenverfahren eingesetzt werden.

Denkbar ist hingegen auch, dass die Veränderungsüberprüfung als solche kein Codierverfahren einsetzt, sondern z.B. ein 1:1 Vergleich mit einer in einem Speicher der Prüfeinheit abgelegten Kopie der Soll-Bilddaten des übergreifenden Pseudo-Bereichs erfolgt. Die Kopie kann z.B. bei der Systemkonfiguration in einem "Anlernmodus" eingespeichert werden.

Die Lösung nach dem ersten Aspekt eignet sich insbesondere aber nicht ausschließlich für anzuzeigenden pixelformatierte Bilddaten, die eine sicherheitsrelevante alphanumerische Zeichenfolge umfassen. Dabei können die Überwachungsbereiche dem Anzeigebereich einzelner Zeichen der Zeichenfolge (Zeichenfeldern) entsprechen. Dementsprechend kann der übergreifende Bereich zumindest die Zeichenfolge und ggf. weitere eher statische Bildbereiche einschließen.

Insbesondere bei zeichenbasierten Überwachungsbereiche ist vorzugsweise vorgesehen, dass die Prüfeinheit einen Speicher mit einer Vergleichstabelle aufweist, mit einer Zuordnung eines Prüfcodes zu jedem für die betrachtete Anwendung als zulässig angesehenen alphanumerischen Zeichen. Dadurch kann die Prüfeinheit aus den Prüfcodes, die durch die Sicherheitsprüfung zu jedem einzelnen Überwachungsbereich des Pseudo-Bereich bestimmt bzw. ermittelt wurden, unter Verwendung der Vergleichstabelle eine vollständige bzw. anzuzeigende Zeichenfolge zurückgewinnen. Mit dieser Ausführungsform kann insbesondere eine zu prüfende Zeichenfolge, z.B. eine Textinformation, insgesamt als Eingangsgröße, z.B. von einem sicheren Quellrechner an die Prüfeinheit übersandt werden, um eine sicherheitsgerichtete Vergleichsoperation auszuführen. Ein wesentlicher Vorteil hiervon (und des zweiten untenstehenden Aspekts) besteht aber darin, dass es nicht erforderlich ist, im Anlernmodus alle im Betrieb zulässigen Zeichenfolge zu kennen. Es reicht aus wenn alle als zulässig angesehenen alphanumerischen Zeichen angelernt werden. Damit kann im Betrieb eine beliebige, frei gewählte Information aus alphanumerischen Zeichen (in beliebiger Sprache, s. oben) sicherheitstechnisch überprüft werden.

Die sicherheitstechnische Überprüfung beliebiger Text- und/oder Zahleninformation als Eingangsgröße kann dabei bevorzugt in der Prüfeinheit selbst erfolgen. Hierzu kann vorgesehen werden, dass der Prüfeinheit als Eingangsgröße, insbesondere über einen getrennten Kanal, eine sicherheitsrelevante alphanumerische Zeichenfolge zugeführt wird und die Prüfeinheit diese, z.B. als Referenzwert, in der Vergleichsoperation zum Vergleich mit der aus den Prüfcodes zurückgewonnenen Zeichenfolge vergleicht. So kann insbesondere bei Nichtübereinstimmung eine sicherheitsgerichtete Reaktion veranlasst werden, insbesondere durch die Prüfeinheit selbst. Alternativ kann die Prüfeinheit jedoch auch die zurückgewonnene Zeichenfolge zwecks einer sicherheitsgerichteten Vergleichsoperation weiterleiten, z.B. an einen sicheren Quellrechner zwecks einer Vergleichsoperation ausgeben, insbesondere um bei Nichtübereinstimmung eine sicherheitsgerichtete Reaktion zu veranlassen.

Ungeachtet der Art der Information kann vorgesehen sein, dass die Prüfeinheit aus einem ersten Prüfmodus - mit an sich bekannter Sicherheitsprüfung und ggf. ohne Veränderungsüberprüfung - in einen zweiten Prüfmodus mit Veränderungsüberprüfung eines vorbestimmten übergreifenden Bereich und sporadischer Sicherheitsprüfung vorbestimmter Teilmengen aus der Anzahl Überwachungsbereiche wechselt. Dieses Umschalten des Prüfmodus kann extern veranlasst insbesondere durch Empfang eines Steuersignals oder selbsttätig (intern veranlasst) erfolgen, z.B. wenn die Prüfeinheit zu jedem Überwachungsbereich aus der Anzahl Überwachungsbereiche mehrfach wiederholt jeweils denselben Prüfcode mit positiven Ergebnis der Sicherheitsprüfung feststellt oder aber die Prüfeinheit einen Kontextwechsel.

Die vorgeschlagene Lösung eignet sich besonders für eine ressourcenoptimierte Sicherheitsüberprüfung von einer sehr hohen Anzahl, insbesondere statischer oder träge ändernder, Überwachungsbereiche. Insbesondere bei alphanumerischen Zeichenfolge ist es zweckmäßig wenn eine Anzahl N Überwachungsbereiche vorgesehen ist mit N ≥ 5, insbesondere mit N > 10. Die Anzahl kann dabei durchaus bis zu mehrere hundert Überwachungsbereiche umfassen.

Ungeachtet dessen wird eine besonders gute Ressourcennutzung erzielt, wenn die Teilmengen des übergeordneten Pseudo-Bereichs, die jeweils nacheinander einer Sicherheitsprüfung unterzogen werden, so gewählt sind, dass jede Teilmenge höchstens 50%, vorzugsweise höchstens 25%, der Überwachungsbereiche aus der jeweiligen Anzahl Überwachungsbereiche im Pseudo-Bereich enthält.

Die Prüfeinheit kann die Sicherheitsprüfung einzelner Überwachungsbereiche jeweils gesondert (oder gruppenweise), zyklisch wiederholend und/oder sequenziell durchführen. Im Falle einer zyklischen Sicherheitsprüfung können im betrachteten Zeitraum ggf. zu jedem Überwachungsbereich mehrere Sicherheitsprüfungen durchgeführt werden. Je nach Anzahl Überwachungsbereiche und Dauer des Zeitraum ist die Ressourcenausnutzung besser wenn nur wenige Wiederholungen der Sicherheitsprüfung zu einem bestimmten Überwachungsbereich erfolgen.

Es kann insbesondere vorgesehen sein, dass die Prüfeinheit selbst bei einem Negativergebnis der Veränderungsüberprüfung und/oder bei einem Negativergebnis jeder Sicherheitsprüfung eine sicherheitsgerichtete Reaktion auslöst und das Negativergebnis vorzugsweise durch Veränderung der Bilddaten dem Benutzer als ein Fehlerfall anzeigt.

Weiterhin kann vorgesehen werden, dass die Veränderungs-Überprüfung mit einer ersten Häufigkeit (f1) wiederholt wird, die der Bildrate f der Anzeigevorrichtung entspricht, z.B. synchron mit anderen externen, dynamisch zu prüfenden Überwachungsbereichen. Es ist jedoch auch möglich, dass die Veränderungs-Überprüfung sich über mehr als einen Bildaufbau erstreckt, vorzugsweise über n Bildaufbauten. Dann beträgt die erste Häufigkeit f1=f/n, mit der f als Bildrate der Anzeige und mit n als ganzer Zahl > 1. Um eine durch den Benutzer sichtbare Fehldarstellung auszuschließen sollte dabei aber vorzugsweise eine erste Häufigkeit f1=f/n > 20 Hz vorgesehen werden.

Die zweite Häufigkeit f2 der bereichsbezogenen Sicherheitsprüfung im Pseudo-Bereich kann insbesondere f2=f1/N betragen, mit N=Anzahl der enthaltenen Überwachungsbereiche, d.h. es wird jeweils nur genau ein Überwachungsbereich aus dem Pseudo-Bereich der Sicherheitsprüfung unterzogen.

### ZWEITER ASPEKT

Ausgehend von dem Vorstehenden, jedoch unabhängig vom o.g. ersten Aspekt der Erfindung, insbesondere ohne die dort vorgeschlagene Veränderungsüberprüfung, wird eine ressourcenoptimierte Überwachung der Darstellung sicherheitsrelevanter alphanumerischer Zeichenfolgen mit einem Verfahren nach Anspruch 13 bzw. einer Vorrichtung nach Anspruch 14 erzielt.

Auch hier wird ausgegangen von einem System mit einem darstellenden Rechner zum Erzeugen von pixelformatierten Bilddaten und einer Anzeigevorrichtung zum Darstellen eines Bildes in Pixelgrafik auf der Anzeigevorrichtung anhand der Bilddaten, wobei das Bild mindestens eine sicherheitsrelevante alphanumerische Zeichenfolge enthält. Ferner hat das System eine Prüfeinheit, welcher die Bilddaten zugeführt werden und die konfiguriert ist, für eine rechentechnische Sicherheitsprüfung anhand der pixelformatierten Bilddaten zu einer Anzahl von Überwachungsbereichen. Dabei entsprechen die Überwachungsbereiche jeweils einer Vielzahl Bildpixel eines darzustellenden Bildes und die Prüfeinheit generiert zu jedem Überwachungsbereich einen jeweiligen Prüfcode für eine interne oder externe, sicherheitsgerichtete Vergleichsoperation, z.B. mit einem Referenzwert.

Gemäß dem zweiten Aspekt wird erfindungsgemäß vorgeschlagen, dass:
- die Überwachungsbereiche Zeichenfelder darstellen, die dem Anzeigebereich einzelner Zeichen der alphanumerischen Zeichenfolge entsprechen;
- in der Prüfeinheit ein übergreifender Bereich vordefiniert ist, welcher jeden Überwachungsbereich aus der Anzahl Überwachungsbereiche und damit die alphanumerischen Zeichenfelder einschließt; dass
- die Prüfeinheit einen Speicher mit einer Vergleichstabelle aufweist, mit einer Zuordnung jeweils eines vorbestimmten Prüfcodes zu jedem zulässigen alphanumerischen Zeichen eines Zeichensatzes; und
- dass die Prüfeinheit zu jedem Zeichenfeld einzeln zunächst einen zugehörigen Prüfcode generiert und anhand der so generierten Prüfcodes für den übergreifenden Bereich insgesamt anhand der Vergleichstabelle eine anzuzeigende Zeichenfolge zurückgewinnt.

Die zurückgewonnene Zeichenfolge kann dann insgesamt weiterverarbeitet werden (anstelle einzelner Zeichen), sie kann insbesondere genutzt werden für einen Vergleich mit einem Referenzwert, entweder innerhalb der Prüfeinheit oder extern, z.B. im sicheren Quellrechner der die anzuzeigende Information dem darstellenden Rechner zuführt. Die Prüfeinheit kann die zurückgewonnene Zeichenfolge somit zur Weiterverarbeitung weiterleiten.

Ein wesentlicher Vorteil des zweiten Aspekts besteht ebenfalls darin, dass es nicht erforderlich ist, im Anlernmodus alle im Betrieb zulässigen Zeichenfolge zu kennen. Es reicht aus, alle als zulässig angesehenen alphanumerischen Zeichen anzulernen und z.B. in einer Vergleichstabelle in der Prüfeinheit zu speichern. Damit kann im Betrieb eine beliebige, frei gewählte Information aus alphanumerischen Zeichen (in beliebiger Sprache, s. oben) sicherheitstechnisch überprüft werden. Die Vergleichstabelle kann ggf. für Standard-Schriftsätze anwendungsunabhängig vorbestimmt werden.

Die sicherheitstechnische Überprüfung kann auch hier bevorzugt in der Prüfeinheit selbst erfolgen. Hierzu ist bevorzugt vorgesehen, dass der Prüfeinheit als Eingangsgröße, insbesondere über einen getrennten Kanal, eine sicherheitsrelevante alphanumerische Zeichenfolge zugeführt wird. So kann die Prüfeinheit diese Eingangsgröße, z.B. als Referenzwert, in einer sicherheitsgerichteten Vergleichsoperation zum Vergleich mit der aus den Prüfcodes zurückgewonnen Zeichenfolge vergleichen.

Es kann somit insbesondere durch die Prüfeinheit selbst bei Nichtübereinstimmung eine sicherheitsgerichtete Reaktion veranlasst werden. Alternativ kann die Prüfeinheit jedoch auch die zurückgewonnene Zeichenfolge zwecks einer sicherheitsgerichteten Vergleichsoperation weiterleiten, wie oben erläutert.

Die oben zum ersten Aspekt als vorteilhaft beschriebenen Weiterbildungen können ebenfalls, je nach Anwendung, vorteilhaft mit dem zweiten Aspekt kombiniert werden. Insbesondere ist es vorteilhaft, wenn in Kombination mit dem zweiten Aspekt auch die oben vorgeschlagene Veränderungs-Überprüfung des übergreifenden Bereichs vorgenommen wird.

Für beide Aspekte sind weiterhin folgende Weiterbildungen möglich:
Die Prüfeinheit ist vorzugsweise physisch bzw. hardwaremäßig von dem die Bilddaten erzeugenden Rechner getrennt ausgeführt. Die Prüfeinheit kann auch von der Anzeigevorrichtung getrennt ausgeführt sein und, z.B. als Modul, an eine Bilddatenleitung zwischen einem handelsüblichen Rechner und einer Anzeigevorrichtung, z.B. einem TFT-Display, angeschlossen sein.

Denkbar ist auch eine Integration der Prüfeinheit in die Hardware der Anzeigevorrichtung.

Dies Prüfeinheit kann mithin als Funktionserweiterung und im Lieferumfang eines Displays, z.B. parallel am Bilddateneingang des Displays, vorgesehen werden.

Dementsprechend betrifft die Erfindung nach Anspruch 16 auch eine Prüfeinheit als solche, die dazu konfiguriert ist, die kennzeichnenden Merkmale nach dem ersten und/oder dem zweiten Aspekt zu verwirklichen. Die o.g. vorteilhaften Weiterbildungen sind betreffen auch die Prüfeinheit als solche.

Ungeachtet der Bauform der Prüfeinheit kann vorgesehen sein, dass - zusätzlich zu den Bilddaten vom darstellenden Rechner - der Prüfeinheit, insbesondere von einem sicheren Quellrechner ausgehend, eine zu einer Teilauswahl mehrerer Überwachungsbereiche aus der Anzahl von Überwachungsbereichen relevante Eingangsgröße, wie bspw. die anzuzeigende Zeichenfolge, zugeführt wird. Ausgehend von einem aufeinanderfolgenden Generieren von Prüfcodes für mehrere Überwachungsbereiche kann ein Vergleich mit einer für diese Menge an Überwachungsbereichen gemeinsam relevanten Eingangsgröße erfolgen. Hierzu kann aus den einzelnen Prüfcodes ein zusammengestellter Vergleichswert zum Vergleich mit der gemeinsamen Eingangsgröße bestimmt werden. Dies ist insbesondere bei alphanumerischen Zeichenfolge zweckmäßig.

Die Lösung gemäß dem ersten und dem zweiten Aspekt eignet sich speziell zur Anwendung bzw. Verwendung bei sicherheitsrelevanten Steuerungs-Funktionen. Beispielhaft, kann das System in einem Multifunktionsterminal eingesetzt werden, insbesondere im Führerstand eines Fahrzeugs, insbesondere eines schienengebundenes Triebfahrzeugs, oder in einer Industrieanlagensteuerung.

Die vorgeschlagene Vorrichtung aus Anzeigevorrichtung und erfindungsgemäßer Prüfeinheit ist darüber hinaus sehr vielseitig einsetzbar, z.B. als Anzeigesystem in der Steuervorrichtung für eine industrielle Maschine, oder als Anzeigesystem im Leitstand, Steuerpult oder dgl. bei einer Industrieanlage, usw.

Weitere Einzelheiten, Vorteile und Merkmale der Erfindung lassen sich der nachfolgenden Figurenbeschreibung entnehmen, in der ohne Einschränkung des Schutzumfangs bevorzugte Ausführungsbeispiele der erfindungsgemäßen Vorrichtung bzw. des erfindungsgemäßen Verfahrens näher erläutert sind. Hierbei zeigen:
**FIG.1****:** ein Übersichtsschema eines System mit einer erfindungemäßen Vorrichtung;
**FIG.2****:** ein schematisches Blockschaltbild einer erfindungemäßen Prüfeinheit gemäß einem ersten Ausführungsbeispiel für ein System nach FIG.1;
**FIG.3****:** ein schematisches Blockschaltbild einer erfindungemäßen Prüfeinheit gemäß einem zweiten Ausführungsbeispiel; und
**FIG.4****:** zur Veranschaulichung des Verfahrens eine rein beispielhafte Darstellung einer Bildschirmseite mit sicherheitsrelevanter Information in mehreren Überwachungsbereichen und einem übergreifenden Bereich der eine ausgewählte Anzahl der Überwachungsbereiche einschließt.

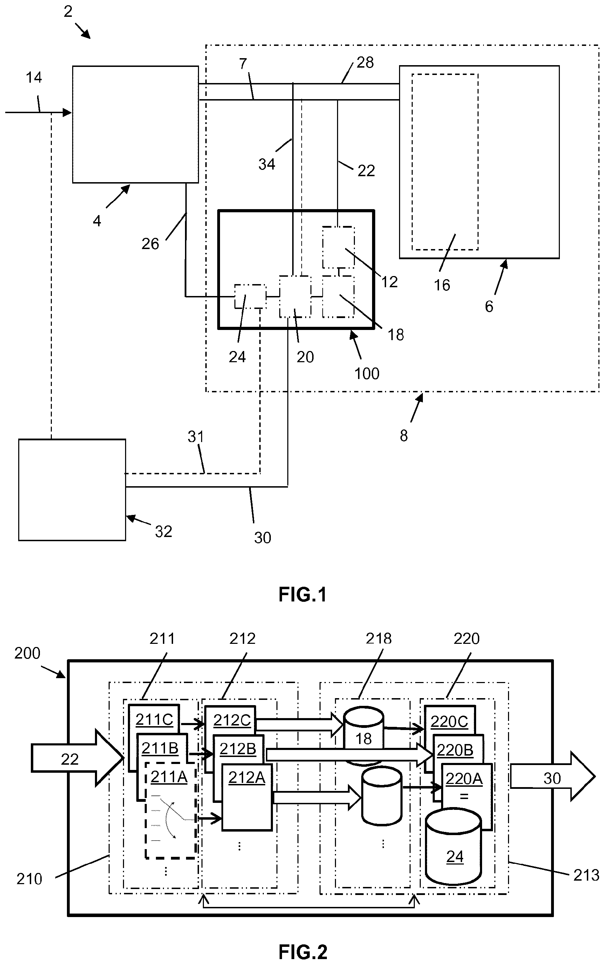

FIG.1 zeigt als Blockschema die prinzipielle Architektur eines Sicherheitssystems 2, das zur Durchführung des erfindungsgemäßen Verfahrens konfigurierbar ist und eine erfindungsgemäße Vorrichtung 8 zur sicheren Anzeige von kritischen Bilddaten aufweist. Die Architektur beruht auf den Patenten EP 2 353 089 B1 und EP 2 273 369 B1, auf die insoweit Bezug genommen wird.

Das Sicherheitssystem 2 umfasst in bestimmungsgemäßer Anwendung einerseits z.B. einen PC 4 als darstellenden Rechner zur Erzeugung von pixelformatieren Bilddaten und andererseits die erfindungsgemäße Vorrichtung 8. Die Vorrichtung 8 hat als Hauptbestandteile einen TFT-Display 6 sowie eine sicherheitstechnische Prüfeinheit 100. Das TFT-Display 6 wird hier über eine LVDS-Bilddatenleitung 7 vom PC 4 betrieben. Über einen Eingangskanal 14 werden dem PC 4 Daten zugeführt, die u.a. sicherheitsrelevante Eingangsgrößen enthalten die zur Anzeige auf dem TFT-Display 6 bestimmt sind. Eingangsgrößen können z.B. innerhalb des PCs 4 durchgeschliffen und über einen Kanal 26 an die Prüfeinheit 100 weitergeleitet werden. Alternativ kann der Wert der Eingangsgröße 14 auch direkt dem FPGA 10 zugeführt werden, z.B. direkt von einem sicheren Quellrechner 32 über einen separaten, sicheren Kanal 31. Der Sicherheitsrechner 32 kann auch zumindest die sicherheitsrelevante Eingangsgrößen dem PC 4 zuführen, z.B. über den Eingangskanal 14.

Durch den PC 4 werden im Betrieb u.a. sicherheitsrelevante Informationen im sichtbaren Anzeigebereich 16 des TFT-Displays 6 dargestellt. Die Information ist "vorgerendert" pixelformatiert und wird damit als vordefinierte bzw. deterministische Bitmap- bzw. Pixeldarstellung auf dem TFT-Display 6 angezeigt.

Das über die Bilddatenleitung 7 an den TFT-Display 6 gespeiste Bilddaten-Signal wird von der Prüfeinheit 100 über eine Rückleseleitung 22 ausgelesen bzw. abgegriffen. Die Prüfeinheit 100 ist dazu bestimmt, für vorbestimmte Bereiche im Anzeigebereich 16, sog. Überwachungsbereiche, eine Sicherheitsprüfung durchführen. Hierzu erstellt die Prüfeinheit 100 Prüfcodes, z.B. CRC-Prüfsummen, mittels eines Prüfcodegenerators bzw. Codierers 12, der z.B. durch ein FPGA implementiert ist. Zu jeder im Betrieb dem PC 4 zugeführten Eingangsgröße wird in einem Anlernmodus in einer Vergleichs-Tabelle 18 in einem Speicher, der Teil einer programmierbaren Logikschaltung der Prüfeinheit 100 ist, ein Vergleichscode hinterlegt und der jeweiligen Eingangsgröße eindeutig zugeordnet. In der Vergleichs-Tabelle 18 entspricht jeder Vergleichscode so einem möglichen Wert einer Eingangsgröße. Die Prüfeinheit 100 kann somit durch den Codierer 12 errechnete Prüfcodes mit Vergleichscodes aus der Tabelle 18 vergleichen. Bei Übereinstimmung wird anhand der Vergleichs-Tabelle 18 ein möglicher Wert der Eingangsgröße bestimmt und in einer Vergleichseinheit 20 mit einem, vorzugsweise in einem Speicher 24 abgelegten, aktuellen Wert der Eingangsgröße verglichen. Auch die Vergleichseinheit 20 wird in einer programmierbaren Logikschaltung realisiert. Werden unzulässige Abweichungen ermittelt, so erfolgt eine sicherheitsgerichtete Reaktion, z.B. durch Unterbrechung der Versorgungsleitung 28 des Displays 6 über die Steuerleitung 34, oder bevorzugt durch Überblenden des fehlerhaften Überwachungsbereichs durch Verändern des Bilddatenstroms, usw.

Bei der in FIG.1 dargestellten Ausführungsbeispiel kann die Prüfeinheit 100 der erfindungsgemäßen Vorrichtung 8 ein negatives Ergebnis der Sicherheitsprüfung auch über einen sicheren Rückmeldungskanal 30 an den übergeordneten, sicheren Quellrechner 32 übermitteln, für weitere sicherheitsgerichtete Reaktionen.

Die Prüfeinheit 100 ist vom unsicheren Rechner 4 getrennt realisiert. Zur Realisierung der Vorrichtung 8 kann z.B. im Sinne einer Sicherheits-Erweiterung eine Prüfeinheit 100 als separates Nachrüstmodul einen bestehendes Display 6 sicherheitstechnisch ausrüsten. Hierzu kann die Prüfeinheit 100 z.B. eingangsseitig parallel am Eingang für die Bilddatenleitung 7 angeordnet sein.

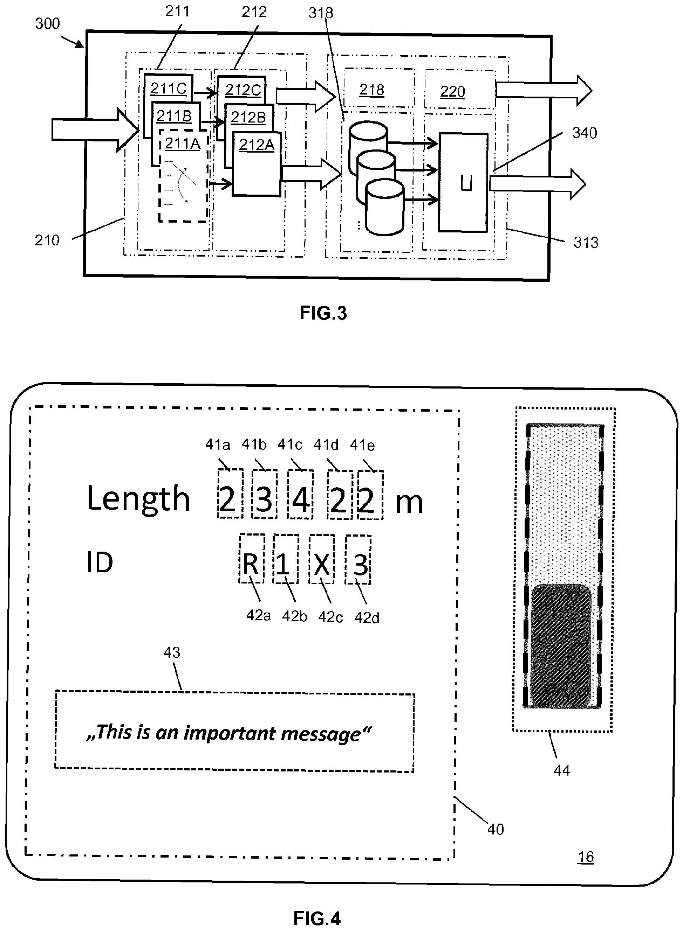

Die Prüfeinheit 100 besteht in den für die Sicherheitsprüfung relevanten Bestandteilen aus einer oder mehreren programmierbaren Logikschaltungen, wie z.B. FPGA, DSP und/oder Mikrocontrollern, die eine rechentechnische Datenverarbeitung ermöglichen. Deshalb kann die Prüfeinheit 100 der Vorrichtung 8 mit den nachfolgend zu FIG.2 oder FIG.3 beschriebenen Eigenschaften bzw. Funktionalitäten konfiguriert werden.

Eine gemäß einem 1. Ausführungsbeispiel konfigurierte Prüfeinheit 200 ist in FIG.2 schematisch dargestellt. Die Prüfeinheit 200 umfasst zumindest zwei Logikschaltungen, z.B. einen FPGA 210 und einen Mikrokontroller 213. In Flussrichtung des Datenstroms ist eingangsseitig eine Selektier-Stufe 211 vorgesehen mit mehreren Auswahl- bzw. Selektier-Einheiten 211A, 211B, 211C ... welche anhand der Pixelkoordinaten vorbestimmter Überwachungsbereiche die relevanten Bilddaten eines Überwachungsbereichs aus dem über den Kanal 22 ausgelesenen Bilddatenstrom auswählen können. Von den Selektier-Einheiten 211A, 211B, 211C... werden den betreffenden Überwachungsbereichen zugehörige Bilddaten einer Codier-Stufe 212 mit der benötigten Anzahl an Codier-Einheiten 212A, 212B, 212C... zugeführt. Über eine Kombinationsverbindung zwischen FPGA 210 und Mikrokontroller 213 werden die anhand der Codier-Einheiten 212A, 212B, 212C... erstellten Prüfcodes (z.B. CRC32-Prüfsummen oder dgl.) einer Referenzstufe 218 mit wie vorstehend beschriebenen Vergleichstabellen für die jeweiligen Überwachungsbereiche zugeführt. In der Referenzstufe 218 kann somit die dem jeweiligen Prüfcode zugehörige mögliche Eingangsgröße bestimmt werden.

Letztere wird dann einer Vergleichsstufe 220 im Mikrocontroller 213 zugeführt, welche ggf. den Speicher 24 mit zwischen gespeicherten Eingangsgrößen umfasst und eine geeignete Anzahl von Vergleichseinheiten 220A, 220B, 220C... implementiert, bspw. um das Ergebnis jeder Sicherheitsprüfung, insbesondere im Schlechtfall, über einen sicheren Kanal 30 ausgeben zu können oder auf andere geeignete Art eine sicherheitsgerichtete Reaktion zu veranlassen.

Eine Besonderheit der erfindungsgemäßen Prüfeinheit 200 besteht darin das mindestens eine erste Selektier-Einheit, hier anhand der Selektier-Einheit 211A veranschaulicht, eine spezielle Konfiguration hat um die Bilddaten zu unterschiedlichen Überwachungsbereichen, wie bspw. 41a, 41b, 41c... in FIG.4, nach einem vorbestimmten zeitlichen Ablauf auszuwählen und jeweils wahlweise nur die Bilddaten eines bestimmten Überwachungsbereichs, z.B. 41a, aus einer Anzahl Überwachungsbereiche 41a, 41b, 41c... in FIG.4, dem Eingang einer der speziellen ersten Selektier-Einheit 211A zugeordneten ersten Codier-Einheit 212A im FPGA 210 zuzuführen. Somit kann ein und dieselbe erste Codier-Einheit 212A nacheinander, aufgrund des durch die speziellen Selektier-Einheit 211A bewirkten Zeit-Multiplexing, zu einer nahezu beliebig großen Anzahl N unterschiedlicher Überwachungsbereiche 41a, 41b, 41c...; 42a, 42b...; 43 den jeweiligen Prüfcode erstellen. Der so erstellte Prüfcode wird für eine weitergehende Sicherheitsprüfung anhand der Referenzstufe 218 und einer zugeordneten Vergleichseinheit, z.B. 220A wie oben beschriebenen verwendet. In der Referenzstufe 218 können unterschiedliche Vergleichstabellen vorgesehen sein, deren Auswahl durch Synchronisation zwischen FPGA 210 und Mikrokontroller 213 erfolgt. Es kann auch eine gemeinsame Vergleichstabelle vorgesehen sein für alle Prüfcodes der unterschiedlichen Überwachungsbereiche 41a, 41b, 41c...; 42a, 42b...; 43 von der variablen ersten Selektier-Einheit 211A auswählbar sind. Die Referenzstufe 218 und zugeordnete erste Vergleichseinheit 220A werden mit dem aktuell von der ersten Selektier-Einheit 211A ausgewählten Überwachungsbereich synchronisiert.

Die Auswahl der Bilddaten verschiedener vorbestimmter Überwachungsbereiche 41a, 41b, 41c...; 42a, 42b...; 43 kann in der Selektier-Einheit 211A anhand der Pixel-Koordinaten erfolgen, die aus dem Bilddatenstrom bzw. der Rückleseleitung 22 mit ausgelesen werden und durch den FPGA 210 bestimmbar sind.

Eine weitere Besonderheit der Prüfeinheit 200 besteht darin, dass die Prüfcodes einer bestimmten Codier-Einheit, hier z.B. die zweite Codier-Einheit 212B, nicht der Referenzstufe 218 zu Bestimmung einer zugehörigen Eingangsgröße zugeführt werden, sondern unmittelbar für einen Abgleich mit einem, z.B. im Speicher 24 des Mikrocontrollers 213 vorgespeicherten Referenz-Überprüfungscode verwendet werden. Dies kann beispielsweise mittels einer zugeordneten Vergleichseinheit, in FIG.2 beispielhaft die zweite Vergleichseinheit 220B, im Mikrocontroller 213 erfolgen. Durch diese Konfiguration kann in der zweiten Selektier-Einheit 211B der zweiten Codier-Einheit 212B, anhand der geeigneter Vorgabe der Pixel-Koordinaten ein übergreifender Bereich 40 (FIG.4) vordefiniert werden. Der übergreifender Bereich 40 (FIG.4) schließt jeden Überwachungsbereich ein aus der Anzahl N sporadisch geprüfter Überwachungsbereiche 41a, 41b, 41c...; 42a, 42b...; 43 (FIG.4) die über die variabel selektierende erste Selektier-Einheit 211A auswählbar sind (s. oben). Anhand der für den Bereich 40 konfigurierten zweiten Selektier-Einheit 211B und dem Direktvergleich in der zweiten Vergleichseinheit 220B, welche der zweiten Codier-Einheit 212B nachgelagert ist, kann die Prüfeinheit 200 zum übergreifenden Bereich 40 mit einer ersten Häufigkeit f1 wiederholend eine Veränderungs-Überprüfung durchführen. Indem der Prüfcode zum übergreifenden Bereich 40 im in der zweiten Vergleichseinheit 220B lediglich mit vorbestimmten einem Referenz-Überprüfungscode verglichen wird, wird also lediglich hinsichtlich einer Veränderung pixelformatierter Bilddaten im übergreifenden Bereich 40 geprüft, nicht jedoch in Bezug auf eine Eingangsgröße.

In Kombination mit der speziellen Konfiguration der ersten Selektier-Einheit 211A kann die Prüfeinheit 210 somit die Sicherheitsprüfung nacheinander zu jeweils einer Teilmenge aus der Anzahl N von Überwachungsbereichen Überwachungsbereiche 41a, 41b, 41c...; 42a, 42b...; 43 (FIG.4) durchführen. Dementsprechend kann jeder dieser Überwachungsbereiche 41a, 41b, 41c...; 42a, 42b...; 43 (FIG.4) in einer vorbestimmten zeitlichen Abfolge unter Verwendung ein und derselben ersten Codier-Einheit 212A und ersten Vergleichseinheit 220A geprüft werden. Dies wird insbesondere dadurch erreicht, dass bezogen auf einen bestimmten dieser Überwachungsbereiche, die Sicherheitsprüfung mit einer zweiten Häufigkeit f2 erfolgt, die geringer ist, als die Häufigkeit f1, mit der sonstige Überwachungsoperationen, insbesondere die o.g. Veränderungs-Überprüfung zum übergreifenden Bereich 40 erfolgt.

Die Prüfeinheit 200 kann weitere in der bekannter Weise vorgesehene Kombinationen aus Selektier-Einheit 211C und Codier-Einheit 212C im FPGA, mit zugeordneter Vergleichstabelle 18 der Referenzstufe 218 und Vergleichseinheit 220C der Vergleichsstufe 220 im Mikrocontroller 213 aufweisen. Die Prüfeinheit 200 kann so mit dem vorbekannten Ansatz unterschiedliche Überwachungsbereiche, insbesondere mit hochdynamischen Informationsinhalt, wie Tachometer und dgl., zu prüfen, wie bspw. einen gesonderten Überwachungsbereich 44 in FIG.4, insbesondere mit der Frequenz bzw. Häufigkeit f2.

Mit Bezugnahme auf FIG.4 wird das erfindungsgemäße Verfahren nochmals im Einzelnen erörtert:

### Initialisierungsphase

Während eines ersten Durchlaufs bzw. zur Initialisierung wird für alle Pixel innerhalb jedes vorgesehenen übergreifenden Bereichs 40 (nachfolgend Pseudo-Bereich) zunächst als Referenz-Überprüfungscode eine Prüfsumme C*cont gebildet und z.B. im Mikrocontroller 213 gespeichert. Es kann dabei das gleiche Codierverfahren zum Einsatz kommen, das für die zu FIG.1 erörterte Sicherheitsprüfung, z.B. in der Codier-Einheit 212C implementiert ist. Dies ist jedoch nicht zwingend, es kann z.B. die gesamte Bildinformation zum Pseudo-Bereich 40 in einem Speicher des Mikrocontrollers zu 13 abgelegt werden als Referenz-Überprüfungscode bzw. Referenz-Überprüfungswert (hier nicht kodiert).

### Prüfphase

### A) Kontinuitätsprüfung

In anschließenden Takten wird nach dem gewählten Format wiederholend der Überprüfungscode, z.B. als Prüfsumme Ccont gebildet, und mit C*cont verglichen. Solange beide Überprüfungscodes Ccont und C*cont übereinstimmen, kann mit der dem gewählten Codierverfahren mit entsprechend ausreichender Wahrscheinlichkeit davon ausgegangen werden, dass sich der Bildinhalt innerhalb des Pseudo-Bereichs 40 nicht verändert hat. Andernfalls soll eine sicherheitsgerichtete Reaktion erfolgen. Diese kann neben einer Offenbarung der Änderung der Anzeige z.B. durch grafische Überdeckung Pseudo-Bereichs 40, auch z.B. eine an den Betrachter gerichtete Indikation des Beginns eines Neustarts des Betrachtungszeitraums sein. Anschließend kann ggf. der als geändert erkannte Überprüfungscode Ccont als neu geltender C*cont verwendet wird.

### B) Sporadische Inhaltsprüfung

Für die Anzahl N der Überwachungsbereiche im Pseudo-Bereich 40 wird nicht mit jedem Takt (z.B. Bildrefresh) einen Prüfcode generiert und geprüft, sondern es wird eine geringe Anzahl Codier-Einheiten, vorzugsweise nur eine Codier-Einheit 212A jeweils einem der "sporadisch geprüften" Überwachungsbereiche 41a, 41b, 41c...; 42a, 42b...; 43 zugeordnet, sodass für diesen aktuell mittels der Selektier-Einheit 211A ausgewählten Überwachungsbereich ein Code erzeugt und entsprechend dem Bildinhaltes, mit einem in der Referenzstufe 218 der Prüfeinheit 200 gespeicherten Referenzwert, als Paarung gegen eine Erwartung (z.B. die übermittelte Eingangsgrösse) verglichen wird.

Es muss während des Betrachtungszeitraums bzw. der Kontinuitätsprüfung soll sichergestellt werden, dass jeder in einem Pseudo-Bereich 40 enthaltene "sporadisch sicherheitsgeprüfter" Überwachungsbereich 41a, 41b, 41c...; 42a, 42b...; 43 mindestens einmal der vorstehenden sporadische Inhalts- bzw. Sicherheitsprüfung unterzogen wird. Dadurch ist gewährleistet, dass alle zu überwachenden Inhalte während des Betrachtungszeitraumes unverändert korrekt angezeigt wurden.

Parallel zur der vorstehend geschilderten Kontinuitätsprüfung des Pseudo-Bereichs 40 mit sporadische Inhaltsprüfung zugehöriger Überwachungsbereich 41a, 41b, 41c...; 42a, 42b...; 43 können natürlich auch weitere Überwachungsbereiche, in FIG.4 mit dem Bereich 44 veranschaulicht, auf herkömmliche Art der Sicherheitsprüfung unterzogen werden.

Bei der sporadischen Inhaltsprüfung können z.B. in zeitlicher Abfolge die Überwachungsbereich 41a -> 41b -> 41c usw. einzeln geprüft werden. Es liegt auch im Rahmen der Erfindung mehrere Gruppen von Überwachungsbereichen rechentechnisch parallel zu prüfen, etwa 41a -> 41b -> 41c usw. parallel zu 42a -> 42b -> 42c usw.

FIG.3 zeigt eine weitere Ausführungsform einer Prüfeinheit 300. Diese kann entsprechend FIG.2 konfiguriert sein, enthält jedoch z.B. im Mikrocontroller 313 zusätzlich ein vorkonfigurierten Zeichensatz-Speicher 318 mit einer oder mehreren vorgespeicherten Vergleichstabellen, welche Prüfcodes nach der gewählten Codierung entsprechenden alphanumerischen Zeichen beliebiger Sprache zuordnen.

Anhand mehrerer Vergleichstabellen im Zeichensatz-Speicher 318 können unterschiedliche Zeichensätze und/oder Grafikformate berücksichtigt werden. Die Prüfeinheit 300 erlaubt es, zu einem vorbestimmten Zeichensatz anhand des Zeichensatz-Speichers 318, mit entsprechender Zuordnung deterministischer Prüfcodes zu alphanumerischen Zeichen für die jeweilige Anwendung, beliebige frei wählbare alphanumerischer Zeichenfolgen, bzw. Zeichenketten (Strings) zu erkennen, und diese z.B. sicherheitstechnisch zu überprüfen, durch Rücksendung an den sicheren Quellrechner 32.

Dem Zeichensatz-Speicher 318 ist eingangsseitig eine Selektier-Einheit 211A der Selektierstufe 211 zugeordnet, die vorbestimmte Zeichenfelder, zeitvariabel auswählt z.B. sequenziell, und die entsprechenden Bilddaten einer zugeordneten Codier-Einheit 212A zuführt. Die Codier-Einheit 212A speist eine zugeordnete Vergleichstabelle im Zeichensatz-Speicher 318 mit den resultieren Prüfcodes der einzelnen Zeichenfelder, z.B. zu den Überwachungsbereich 41a -> 41b -> 41c usw. in FIG.4. Die aus dem Zeichensatz-Speicher 318 gewonnen Zeichen werden anschließend in einer Verkettungsstufe 340, z.B. im Mikrocontroller 313, in der vorgegeben Abfolge zusammengefügt bzw. verkettet um die anzuzeigende Zeichenfolge insgesamt aus dem der Prüfeinheit 300 zugeführten Bilddatenstrom zurückzugewinnen. Dies erlaubt unter anderem eine sicherheitstechnische Überprüfung von beliebigen alphanumerischen Zeichenfolgen, z.B. Text- und/oder Zahleninformation, die im Anlernmodus nicht vorbekannt ist.

In Verbindung mit der Rückgewinnung von so ermittelten Zeichenfolgen ist es vorteilhaft mit der Prüfeinheit 300 auch die vorstehend beschriebene Kontinuitätsprüfung bzw. Veränderungsüberprüfung für einen die einzelnen Zeichenfelder übergreifenden Berich zu implementieren. So kann sichergestellt werden, dass zwischenzeitlich keine Veränderung eines zuvor codierten Zeichens erfolgt ist.

Der Gegenstand der vorliegenden Erfindung ergibt sich nicht nur aus dem Gegenstand der einzelner Ansprüche. Alle offenbarten Merkmalskombinationen werden als erfindungswesentlich beansprucht.

### Bezugszeichenliste

**FIG.1**
   2 Sicherheitssystem
   4 Rechner (PC)
   6 TFT-Display
   7 Bilddatenleitung
   100 Prüfeinheit
   12 Prüfcodegenerator
   14 Eingangskanal
   16 Anzeigebereich
   18 Vergleichs-Tabelle
   20 Vergleichseinheit
   22 Rückleseleitung
   24 Speicher
   26 Kanal
   28 Netzspannungs-Versorgungsleitung
   30 Rückmeldekanal
   31 sicherer Kanal
   32 Sicherheitsrechner
**FIG.2**
   18 Vergleichs-Tabelle
   22 Rücklesekanal
   24 Speicher
   30 Rückmeldekanal
   200 Prüfeinheit
   210 FPGA
   211 Selektier-Stufe
   211A, 211B, 211C ... Selektier-Einheit
   212 Codier-Stufe
   212A, 212B, 212C... Codier-Einheit
   213 Mikrokontroller
   218 Referenzstufe
   220 Vergleichsstufe
   220A, 220B, 220C... Vergleichseinheit
**FIG.3**
   210 FPGA
   211 Selektier-Stufe
   211A, 211B, 211C ... Selektier-Einheit
   212 Codier-Stufe
   212A, 212B, 212C... Codier-Einheit
   218 Referenzstufe
   220 Vergleichsstufe
   220A, 220B, 220C... Vergleichseinheit
   300 Prüfeinheit
   313 Mikrokontroller
   318 Zeichensatz-Speicher
   340 Verkettungsstufe
**FIG.4**
   16 Anzeigebereich
   40 übergreifender Bereich (pseudo-geprüft)
   41a, 41b, 41c... Überwachungsbereich (sporadisch geprüft)
   42a, 42b, 41b... Überwachungsbereich (sporadisch geprüft)
   43 Überwachungsbereich (sporadisch geprüft)
   44 Überwachungsbereich (regulär geprüft)

## Patentansprüche

1. Verfahren zur Darstellung einer sicherheitsrelevanten Information, umfassend:
- Erzeugen von pixelformatierten Bilddaten in einem Rechner, Weiterleiten der Bilddaten an eine Anzeigevorrichtung und Darstellen eines Bildes in Pixelgrafik auf der Anzeigevorrichtung anhand der Bilddaten;
- Zuführen der Bilddaten zu einer Prüfeinheit;
- rechentechnische Sicherheitsprüfung durch die Prüfeinheit anhand der pixelformatierten Bilddaten zu einer Anzahl von Überwachungsbereichen, wobei die Überwachungsbereiche jeweils eine Vielzahl Bildpixel eines darzustellenden Bildes umfassen, und wobei die Prüfeinheit zu jedem Überwachungsbereich einen Prüfcode generiert für eine Vergleichsoperation mit einem Referenzwert; **dadurch gekennzeichnet, dass**
- in der Prüfeinheit ein übergreifender Bereich vordefiniert ist, welcher jeden Überwachungsbereich aus der Anzahl Überwachungsbereiche einschließt, vorzugsweise vollständig einschließt; dass
- die Prüfeinheit während eines Zeitraums zum übergreifenden Bereich mit einer ersten Häufigkeit wiederholend eine Veränderungsüberprüfung durchführt, insbesondere hinsichtlich einer Veränderung der pixelformatierten Bilddaten zum übergreifenden Bereich; und dass
- während des Zeitraums der Veränderungsüberprüfung die Sicherheitsprüfung nacheinander zu jeweils einer Teilmenge aus der Anzahl von Überwachungsbereichen erfolgt, sodass eine Sicherheitsprüfung zu einem bestimmten Überwachungsbereich im übergreifenden Bereich mit einer zweiten Häufigkeit erfolgt, die geringer ist als die erste Häufigkeit.

2. Vorrichtung zur Darstellung einer sicherheitsrelevanten Information, umfassend:
- eine Anzeigevorrichtung zum Darstellen eines Bildes in Pixelgrafik auf der Anzeigevorrichtung anhand von rechnergenerierten, pixelformatierten Bilddaten;
- eine Prüfeinheit, welcher die Bilddaten zugeführt werden und die konfiguriert ist, für eine rechentechnische Sicherheitsprüfung anhand der pixelformatierten Bilddaten zu einer Anzahl von Überwachungsbereichen, wobei die Überwachungsbereiche jeweils eine Vielzahl Bildpixel eines darzustellenden Bildes umfassen, und wobei die Prüfeinheit zu jedem Überwachungsbereich einen Prüfcode generiert für eine Vergleichsoperation mit einem Referenzwert;
**dadurch gekennzeichnet, dass** die Prüfeinheit so konfiguriert ist, dass
- ein übergreifender Bereich vordefiniert ist, welcher jeden Überwachungsbereich aus der Anzahl Überwachungsbereiche einschließt;
- die Prüfeinheit zum übergreifenden Bereich mit einer ersten Häufigkeit wiederholend eine Veränderungsüberprüfung durchführt, insbesondere hinsichtlich einer Veränderung pixelformatierter Bilddaten zum übergreifenden Bereich; und
- die Prüfeinheit die Sicherheitsprüfung nacheinander zu jeweils einer Teilmenge aus der Anzahl von Überwachungsbereichen durchführt, sodass bezogen auf einen bestimmten dieser Überwachungsbereiche die Sicherheitsprüfung mit einer zweiten Häufigkeit erfolgt, die geringer ist als die erste Häufigkeit.

3. Verfahren bzw. Vorrichtung nach Anspruch 1 bzw. 2, **dadurch gekennzeichnet, dass** die Prüfeinheit während des Zeitraums der Veränderungsüberprüfung zu jedem Überwachungsbereich mindestens eine Sicherheitsprüfung durchführt.

4. Verfahren bzw. Vorrichtung nach Anspruch 1 bzw. 2 oder 3, **dadurch gekennzeichnet, dass** die Prüfeinheit pro Veränderungsüberprüfung, insbesondere rechentechnisch parallel zu jeder Veränderungsüberprüfung, jeweils eine Sicherheitsprüfung zu mindestens einem ausgewählten Überwachungsbereich aus der Anzahl Überwachungsbereiche durchführt.

5. Verfahren bzw. Vorrichtung nach Anspruch 1 bzw. 2, 3 oder 4, **dadurch gekennzeichnet, dass** die Prüfeinheit zu Beginn des Zeitraums zum übergreifenden Bereich anhand der Bilddaten einen Referenz-Überprüfungscode generiert und bei anschließenden Veränderungsüberprüfungen anhand der Bilddaten jeweils einen neuen Überprüfungscode generiert und diesen mit dem Referenz-Überprüfungscode vergleicht, um auf Veränderung der pixelformatierten Bilddaten zum übergreifenden Bereich zu schließen, wobei vorzugsweise eine Veränderung dem Benutzer als Fehlerfall angezeigt wird.

6. Verfahren bzw. Vorrichtung nach einem der Ansprüche 1 bis 5, **dadurch gekennzeichnet, dass** die Prüfeinheit mindestens eine Recheneinheit umfasst und die Sicherheitsprüfung zu jedem Überwachungsbereich anhand mindestens eines ersten in der Recheneinheit implementierten Codierers, vorzugsweise mittels eines ersten Codierverfahrens, durchführt und die Veränderungsüberprüfung zum übergreifenden Bereich anhand eines getrennt in der Recheneinheit implementierten zweiten Codierers durchführt, vorzugsweise mittels eines zweiten Codierverfahrens.

7. Verfahren bzw. Vorrichtung nach einem der Ansprüche 1 bis 6, **dadurch gekennzeichnet, dass** die anzuzeigenden pixelformatierten Bilddaten eine sicherheitsrelevante alphanumerische Zeichenfolge umfassen, die Überwachungsbereiche dem Anzeigebereich einzelner Zeichen der Zeichenfolge entsprechen, und dass der übergreifende Bereich zumindest die Zeichenfolge einschließt.

8. Verfahren bzw. Vorrichtung nach Anspruch 7, **dadurch gekennzeichnet, dass**
- die Prüfeinheit einen Speicher mit einer Vergleichstabelle aufweist, mit einer Zuordnung eines Prüfcodes zu jedem zulässigen alphanumerischen Zeichen und die Prüfeinheit aus den durch die Sicherheitsprüfung zu jedem Überwachungsbereich bestimmten Prüfcodes anhand der Vergleichstabelle eine Zeichenfolge zurückgewinnt; und vorzugsweise
- der Prüfeinheit als Eingangsgröße, insbesondere über einen getrennten Kanal, eine sicherheitsrelevante alphanumerische Zeichenfolge zugeführt wird und die Prüfeinheit diese in der Vergleichsoperation zum Vergleich mit der aus den Prüfcodes zurückgewonnen Zeichenfolge vergleicht, insbesondere um bei Nichtübereinstimmung eine sicherheitsgerichtete Reaktion zu veranlassen.

9. Verfahren bzw. Vorrichtung nach einem der Ansprüche 1 bis 8, **dadurch gekennzeichnet, dass** die Prüfeinheit aus einem ersten Prüfmodus in einen zweiten Prüfmodus mit Veränderungsüberprüfung eines vorbestimmten übergreifenden Bereich und sporadischer Sicherheitsprüfung vorbestimmter Teilmengen aus der Anzahl Überwachungsbereiche wechselt, insbesondere durch Empfang eines Steuersignals oder selbsttätig wenn die Prüfeinheit zu jedem Überwachungsbereichen aus der Anzahl Überwachungsbereiche mehrfach wiederholt jeweils denselben Prüfcode feststellt.

10. Verfahren bzw. Vorrichtung nach einem der Ansprüche 1 bis 9, **dadurch gekennzeichnet, dass** die Prüfeinheit die Sicherheitsprüfung einzelner Überwachungsbereiche gesondert, zyklisch wiederholend und/oder sequenziell durchführt.

11. Verfahren bzw. Vorrichtung nach einem der Ansprüche 1 bis 10, **dadurch gekennzeichnet, dass** die Prüfeinheit bei einem Negativergebnis der Veränderungsüberprüfung und/oder bei einem Negativergebnis jeder Sicherheitsprüfung eine sicherheitsgerichtete Reaktion auslöst und vorzugsweise durch Veränderung der Bilddaten dem Benutzer ein Fehlerfall anzeigt.

12. Verfahren zur Darstellung sicherheitsrelevanter alphanumerischer Zeichenfolgen, umfassend:
- Erzeugen von pixelformatierten Bilddaten in einem Rechner, Weiterleiten der Bilddaten an eine Anzeigevorrichtung und Darstellen eines Bildes in Pixelgrafik auf der Anzeigevorrichtung anhand der Bilddaten, wobei das Bild mindestens eine sicherheitsrelevante alphanumerische Zeichenfolge enthält;
- Zuführen der Bilddaten zu einer Prüfeinheit;
- rechentechnische Sicherheitsprüfung durch die Prüfeinheit anhand der pixelformatierten Bilddaten zu einer Anzahl von Überwachungsbereichen, wobei die Überwachungsbereiche jeweils eine Vielzahl Bildpixel eines darzustellenden Bildes umfassen, und wobei die Prüfeinheit zu jedem Überwachungsbereich einen Prüfcode generiert für eine Vergleichsoperation mit einem Referenzwert;
**dadurch gekennzeichnet, dass**
- die Überwachungsbereiche Zeichenfelder darstellen, die dem Anzeigebereich einzelner Zeichen der alphanumerischen Zeichenfolge entsprechen;
- in der Prüfeinheit ein übergreifender Bereich vordefiniert ist, welcher jeden Überwachungsbereich aus der Anzahl Überwachungsbereiche und damit die alphanumerischen Zeichenfelder einschließt; dass
- die Prüfeinheit einen Speicher mit einer Vergleichstabelle aufweist, mit einer Zuordnung jeweils eines vorbestimmten Prüfcodes zu jedem zulässigen alphanumerischen Zeichen eines Zeichensatzes; und
- dass die Prüfeinheit zu jedem Zeichenfeld einzeln zunächst einen zugehörigen Prüfcode generiert und anhand der so generierten Prüfcodes für den übergreifenden Bereich insgesamt anhand der Vergleichstabelle eine anzuzeigende Zeichenfolge zurückgewinnt.

13. Vorrichtung zur Darstellung sicherheitsrelevanter alphanumerischer Zeichenfolgen, umfassend:
- eine Anzeigevorrichtung zum Darstellen eines Bildes in Pixelgrafik auf der Anzeigevorrichtung anhand von rechnergenerierten, pixelformatierten Bilddaten;
- eine Prüfeinheit, welcher die Bilddaten zugeführt werden und die konfiguriert ist für eine rechentechnische Sicherheitsprüfung anhand der pixelformatierten Bilddaten zu einer Anzahl von Überwachungsbereichen, wobei die Überwachungsbereiche jeweils eine Vielzahl Bildpixel eines darzustellenden Bildes umfassen, und wobei die Prüfeinheit zu jedem Überwachungsbereich einen Prüfcode generiert für eine Vergleichsoperation mit einem Referenzwert;
**dadurch gekennzeichnet, dass**
- die Überwachungsbereiche Zeichenfelder darstellen, die dem Anzeigebereich einzelner Zeichen der alphanumerischen Zeichenfolge entsprechen;
- in der Prüfeinheit ein übergreifender Bereich vordefiniert ist, welcher jeden Überwachungsbereich aus der Anzahl Überwachungsbereiche und damit die alphanumerischen Zeichenfelder einschließt; dass
- die Prüfeinheit einen Speicher mit einer Vergleichstabelle aufweist, mit einer Zuordnung jeweils eines vorbestimmten Prüfcodes zu jedem zulässigen alphanumerischen Zeichen eines Zeichensatzes; und
- dass die Prüfeinheit zu jedem Zeichenfeld einzeln zunächst einen zugehörigen Prüfcode generiert und anhand der so generierten Prüfcodes für den übergreifenden Bereich insgesamt anhand der Vergleichstabelle eine anzuzeigende Zeichenfolge zurückgewinnt.

14. Verfahren bzw. Vorrichtung nach Anspruch 12 bzw. 13, **dadurch gekennzeichnet, dass** der Prüfeinheit als Eingangsgröße, insbesondere über einen getrennten Kanal, eine sicherheitsrelevante alphanumerische Zeichenfolge zugeführt wird und die Prüfeinheit diese in einer Vergleichsoperation zum Vergleich mit der aus mehreren Prüfcodes zurückgewonnen Zeichenfolge vergleicht, insbesondere um bei Nichtübereinstimmung eine sicherheitsgerichtete Reaktion zu veranlassen.

15. Prüfeinheit für die Darstellung sicherheitsrelevanter Information, wobei
- der Prüfeinheit pixelformatierte Bilddaten zuführbar sind; und
- die Prüfeinheit konfiguriert ist für eine rechentechnische Sicherheitsprüfung anhand der Bilddaten zu einer Anzahl von Überwachungsbereichen, idem die Prüfeinheit zu jedem Überwachungsbereich einen Prüfcode generiert;
**dadurch gekennzeichnet, dass**
die Prüfeinheit die kennzeichnenden Merkmale nach einem der Ansprüche 2 oder 13 aufweist bzw. konfiguriert ist, die kennzeichnenden Merkmale nach Anspruch 1 bzw. 12 auszuführen.

16. Verwendung einer Vorrichtung nach einem der vorstehenden Ansprüche 2 bis 11 bzw. 12 bis 15 für sicherheitsrelevante Steuerungs-Funktionen, insbesondere in einem
- Multifunktionsterminal im Führerstand eines Fahrzeugs, insbesondere eines schienengebundenes Triebfahrzeugs; oder
- Anzeigesystem einer Steuervorrichtung für eine Maschine, einem Leitstand oder Steuerpult einer Industrieanlage, oder dgl.
